# EUROPÄISCHE PATENTSCHRIFT

(11) **EP 2 624 731 B1**
(45) Veröffentlichungstag und Bekanntmachung des Hinweises auf die Patenterteilung: **02.09.2015**
(21) Anmeldenummer: 10771625.0
(22) Anmeldetag: 08.10.2010
(51) Int. Cl.: A47J 31/36

(54) **EXTRAKTIONSGERÄT UND DICHTUNGSSYSTEM**
EXTRACTION DEVICE AND SEALING SYSTEM
APPAREIL D'EXTRACTION ET SYSTÈME D'ÉTANCHÉITÉ

(43) Veröffentlichungstag der Anmeldung: 14.08.2013
(73) Patentinhaber: Luna Technology Systems LTS GmbH, 8304 Wallisellen (CH)
(72) Erfinder: DEUBER, Louis, 8805 Richterswil (CH)
(74) Vertreter: Frei Patent Attorneys
(86) Internationale Anmeldenummer: PCT/CH2010/000249
(87) Internationale Veröffentlichungsnummer: WO 2012/045184

(56) Entgegenhaltungen:
- WO-A1-2009/090201
- WO-A2-2010/092543
- DE-T2- 60 126 945
- GB-A- 1 083 451
- US-A- 2 209 235

## Beschreibung

Die Erfindung betrifft Extraktionsgeräte zum Zubereiten von Getränken oder dergleichen aus einem in einer Kapsel enthaltenen Extraktionsgut, beispielsweise gemahlenem Kaffee. Sie betrifft auch ein Dichtungssystem für ein solches Extraktionsgerät und ein Brühmodul.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt und erfreuen sich nach wie vor steigender Beliebtheit. In vielen entsprechenden Systemen sind die Portionsverpackungen als Kapseln ausgebildet, in denen das Extraktionsgut luftdicht abgeschlossen ist. Für die Extraktion wird in der Regel die Kapsel oder ein in einem Kapselinneren vorhandener gesonderter Behälter an zwei einander gegenüberliegenden Seiten angestochen. Auf der ersten Seite wird durch eine Injektorvorrichtung (Einleitvorrichtung) eine Extraktionsflüssigkeit - im Allgemeinen heisses Wasser - eingeleitet. Auf der zweiten Seite wird durch eine Extraktionsvorrichtung (Ausleitvorrichtung) das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel in das Brühmodul eingelegt und die Brühkammer verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind oft als horizontale Brühmodule ausgebildet, d.h. der Kapseleinwurf erfolgt von oben, das Verschliessen der Brühkammer ist eine horizontale Relativbewegung zweier Brühkammerteile, die Brühflüssigkeit fliesst im wesentlichen horizontal, und der Kapselbehälter ist unterhalb der Brühkammer ausgebildet. Ebenfalls bekannt sind sogenannte Kolbenträgersysteme, bei denen die Brühkammer zwischen einem Wasserinjektor und einem Kolben mit einem Schwenkhebel gebildet wird.

Beim Brühen des Getränks wird die Extraktionsflüssigkeit oft unter hohem Druck von beispielsweise 10-20 bar in die Kapsel eingeleitet. Dabei ist wichtig, dass die Extraktionsflüssigkeit durch die Kapsel hindurch zur zweiten Seite gelangt und nicht aufgrund des hohen Drucks an der Kapsel vorbei fliesst. Daher muss die Kapsel gegen die Injektorvorrichtung und gegen die Extraktionsvorrichtung abgedichtet werden, wobei diese Dichtungen kombiniert werden können.

Kapseln gängiger Geräte haben eine konisch-becherförmige Grundform mit einem seitlich vorstehenden Kragen. Dieser Kragen hat gemäss einem ersten gängigen Vorgehen eine wichtige Funktion beim Abdichten. Im Bereich des Kragens liegt an der Endfläche eine ringförmige Dichtung an, wobei der Kragen durch ein ebenfalls ringförmiges Gegenelement gestützt wird, derart, dass der Kragen zwischen Dichtung und Gegenelement geklemmt wird. Gemäss einem zweiten gängigen Vorgehen erfolgt die Abdichtung durch einen Passsitz, indem die konische, im Querschnitt kreisförmige Mantelfläche des Bechers flächig gegen eine entsprechend gleich ausgeformte konische Fläche einer Brühkammer-Aufnahme gedrückt wird. Der Kragen des Bechers ist notwendig zum Halten und Positionieren der Kapsel beim Einführen der Kapsel in diese Brühkammer-Aufnahme.

In DE-T-601 26 945 ist eine Brühkammer bestehend aus einem ortsfesten und einem beweglichen Teil gemäss der ersten Vorgehensweise gezeigt. Der bewegliche Teil beinhaltet einen Behälter aus einem starren, metallischen Gehäuse, einen um die Einleitöffnung angebrachten Durchstechsystem und eine extraktionsseitig angebrachte dynamische Dichtung. Der ortsfeste Teil weist unter anderem ein ringförmiges Gegenelement auf, auf welchem der Kragen der Kapsel zu liegen kommt. Die Kapsel wird vor dem Extraktionsprozess in besagten Behälter eingebracht, indem der bewegliche Teil zum ortsfesten Teil geführt wird. Da das Gehäuse beweglich gelagert ist und die dynamische Dichtung ein Bewegen des Gehäuses zulässt, liegt die Dichtung während der Extraktion eng gegen die Schulter des ortsfesten Teils an.

WO 2010/092543 verwendet eine etwas andere Vorgehensweisen zur Positionierung und Abdichtung der Kapsel, bei welcher der Kragen der Kapsel beim Schliessen der Brühkammer so mechanisch deformiert wird, dass ein abgedichtetes System entsteht.

Die beiden genannten Vorgehensweisen haben sich an sich bewährt; sie sind jedoch nur für Kapseln der genannten konischen Becherform mit Kragen geeignet. Diese Form hat den Nachteil, dass sie bei Lagerung und Transport relativ viel Platz beansprucht und dass ausserdem der Kragen je nach Material bei mechanischer Beanspruchung leicht beschädigt werden kann.

Es ist eine Aufgabe der Erfindung, ein Extraktionsgerät mit einem Dichtungssystem zur Verfügung zu stellen, welches nicht von dieser Becherform mit umlaufendem Kragen abhängt, welche für verschiedene Kapselformen und verschiedene Brühkammer-Funktionsmechanismen geeignet ist und welche trotzdem zuverlässig die Dichtungsfunktion wahrnimmt.

Diese Aufgabe wird gelöst durch die Erfindung, wie sie in den Patentansprüchen definiert ist.

Ein Extraktionsgerät der hier diskutierten Art ist insbesondere zum Brühen eines Getränks eingerichtet. Es ist beispielsweise eine Kaffeemaschine. Das Extraktionsgerät weist ein Brühmodul zum Aufnehmen einer Kapsel mit einem Extraktionsgut auf. Das Brühmodul weist ein erstes Brühmodulteil und ein relativ zu diesem bewegbares zweites Brühmodulteil auf, wobei das erste und das zweite Brühmodulteil eine Ausleitvorrichtung zum Ausleiten eines Extraktionsprodukts aus der Kapsel und eine Einleitvorrichtung zum Einleiten einer Extraktionsflüssigkeit in die Kapsel bildet, wobei die Einleitvorrichtung mindestens eine Anstechspitze aufweist. Daneben besitzt das Extraktionsgerät auch eine Flüssigkeitspumpe zum Pumpen der Extraktionsflüssigkeit und gegebenenfalls eine Heizung zum Aufheizen der Extraktionsflüssigkeit vor dem Einleiten in die Kapsel. Die Extraktionsflüssigkeit ist in vielen Fällen Wasser, und wenn das Extraktionsgerät eine Kaffee- oder Teemaschine ist, wird sie auch als "Brühflüssigkeit" bezeichnet.

Ein solches erfindungsgemässes Extraktionsgerät zeichnet sich im Wesentlichen dadurch aus, dass es ein Dichtungssystem mit einer die Anstechspitze bzw. die Anstechspitzen der Einleitvorrichtung umgebenden elastisch verformbaren Dichtung aufweist, einen die Kapsel positionierend und haltend umgreifenden Dichtungskragen und mindestens eine umlaufende Dichtungslippe und/oder einen umlaufenden Dichtungswulst aufweist, die bzw. der linien-, oder streifenartig an einer Fläche der Kapsel anliegt und die Kapselwand gegen ein Kapselinneres drückt. Dass die Kapselwand gegen ein Kapselinneres gedrückt wird, bedeutet dass am Ort der Dichtungslippe bzw. des Dichtungswulstes keine stützendes Gegenelement vorhanden ist, sondern dass die Kapselwand durch die Dichtungslippe bzw. den Dichtungswulst vielmehr quasi gegen die Kapselfüllung gedrückt wird.

Dabei ist die Dichtung so im Extraktionsgerät (insbesondere in dessen Brühmodul) gehalten, dass die genaue Position der Kapsel durch die Dichtung bestimmt wird. Insbesondere ist im Unterschied zum Stand der Technik das Extraktionsgerät frei von einem Sitz, der durch ein insbesondere nicht elastisch verformbares, die Kapsel teilweise umgebendes und flächig an einer umlaufenden Wand anliegendes Element gebildet wird. Sie ist in bevorzugten Ausführungsformen insbesondere frei von an der Kapselwandung anliegenden, nicht elastischen Elementen die zwischen einer Injektorplatte der Einleitvorrichtung (Platte, aus welcher die Anstechspitzen herausragen und gegen welche die Kapsel beim Anstechen gedrückt wird) und der Dichtung an der Kapsel anliegen.

Dieser Ansatz beruht auf der durchaus überraschenden Erkenntnis, dass bei den für das Brühen eines Getränkes, bspw. Espresso, erforderlichen Drücken eine solche umlaufende Lippendichtung verwendet werden kann, um die notwendige Abdichtungsfunktion zu erwirken, ohne dass ein Amboss oder ein Passsitz notwendig ist.

Eine Dichtung der beschriebenen Art ist an der Einleitvorrichtung vorhanden. Eine solche injektionsseitige Dichtung hat den Zweck zu verhindern, dass in die Kapsel einzuleitende Brühflüssigkeit einen anderen Weg nimmt als in die Kapsel hinein gepresst zu werden. Auf der Injektionsseite sind die anfallenden Drücke besonders gross. Besonders vorteilhaft ist die Erfindung in Kombination mit Injektionssystemen, in denen wie in PCT/CH2010/000098 ausführlich beschrieben die Brühflüssigkeit nicht durch eine mit einem Kanal versehene Anstechspitze hindurch injiziert wird. Bei solchen Systemen dient vielmehr eine Anstechspitze zum Anstechen der Kapsel. Die Brühflüssigkeit wird in der Nähe der Anstechspitze und durch die von der Anstechspitze erzeugte Öffnung hindurch, aber an der Anstechspitze vorbei, in die Kapsel eingeleitet. Insbesondere kann dann eine Einleitöffnung für die Brühflüssigkeit in der Ebene liegen, an welcher die Kapselwand anliegt. Solche Systeme haben sich als besonders günstig in Bezug auf Anstechsysteme und insbesondere in Bezug auf Anstechsysteme der umweltfreundlicheren Kapseln mit einer Kunststoffwand erwiesen. Sie bewirken aber, dass der gesamte Druck der Brühflüssigkeit am Dichtungssystem anliegt und nicht wie beim Injizieren durch eine Spitze direkt ins Innere der Kapsel ein Teil des Drucks durch das Extraktionsgut abgedämpft wird.

Ergänzend weist das Dichtungssystem bevorzugt auch auf der Seite der Ausleitvorrichtung eine Dichtung der beschriebenen Art mit mindestens einer umlaufenden Dichtungslippe und/oder einem umlaufenden Dichtungswulst auf, die bzw. der linien-, oder streifenartig an einer Fläche der Kapsel anliegt und die Kapselwand gegen ein Kapselinneres drückt. Vorzugsweise weist auch eine solche extraktionsseitige Dichtung einen die Kapsel positionierend umgebenden Dichtungskragen auf. Eine solche extraktionsseitige Dichtung umgibt extraktionsseitige Anstechspitzen mit zugeordneten, beispielsweise ebenfalls von den Anstechspitzen örtlich getrennten Ausleitöffnungen und hat zum Zweck, aus der Kapsel austretende Flüssigkeit der vorgesehenen Leitung zuzuführen und zu verhindern, dass sie an der Kapsel vorbei einen anderen Weg nimmt.

Die injektionsseitige Dichtung und ggf. auch die extraktionsseitige Dichtung sind an der Einleitvorrichtung bzw. der Ausleitvorrichtung befestigt, und bei der Bewegung der beiden Brühmodulteile relativ zu einander (also insbesondere der Einleitvorrichtung relativ zur Ausleitvorrichtung) wird die Dichtung/werden die Dichtungen mit bewegt.

Die injektionsseitige Dichtung und ggf. auch die extraktionsseitige Dichtung ist elastisch, insbesondere aus einem Elastomer gefertigt. Für die injektionsseitige Dichtung haben sich Materialien mit Shore-Härten zwischen 50 und 90 Shore A, insbesondere zwischen 70 und 85 Shore A als besonders günstig herausgestellt. Die Härte einer extraktionsseitigen Dichtung kann gleich sein wie die Härte der injektionsseitigen Dichtung, oder sie kann geringer sein. Insbesondere kann die extraktionsseitige Dichtung eine Shore-Härte von zwischen 55 und 80 Shore A aufweisen.

Oft ist es von Vorteil, wenn die Dichtung so ausgebildet ist, dass mindestens eine Dichtungslippe und/oder ein Dichtungswulst die Kapsel entlang einer umlaufenden Fläche umgreift und dabei durch ihre Elastizität gegen die Kapselwand gedrückt wird, derart, dass die Kapsel aufgrund dieses Anliegens der Dichtungslippe(n) bzw. des Dichtungswulstes/der Dichtungswülste durch die Dichtung gehalten wird.

Ebenfalls als je nach Situation besonders günstig hat sich (insbesondere für die injektionsseitige Dichtung, aber in Ausführungsformen gegebenenfalls auch für die extraktionsseitige Dichtung) ein Aufbau herausgestellt der eine Mehrzahl von umlaufenden Dichtungslippen und/oder Dichtungswülsten aufweist, also mindestens zwei Dichtungslippen, mindestens je eine Dichtungslippe und ein Dichtungswulst oder mindestens zwei Dichtungswülste. Die Dichtungslippe(n) bzw. Dichtungswulst/Dichtungswülste drücken dabei je aufgrund ihrer Elastizität die Kapselwand gegen ein Kapselinneres, wobei zwischen aufeinander folgenden Dichtungslippen bzw. Dichtungswülsten jeweils eine Vertiefung angeordnet ist, derart, dass im Betriebszustand zwischen den aufeinander folgenden Dichtungslippen bzw. Dichtungswülsten und der Kapsel ein umlaufender Hohlraum gebildet wird.

Die umlaufende Fläche wird bei kreiszylindrischen oder konischen Kapseln durch die Mantelfläche, bei einer Würfel- oder Quaderform durch vier umlaufende Seiten gebildet (die in vielen Ausführungsformen verschieden von der Seite/den Seiten sind, durch welche die Brühflüssigkeit injiziert und durch welche das gebrühte Getränk aus der Kapsel ausgeleitet wird). Eine Dichtungslippe bzw. ein Dichtungswulst kann an der Kapselwand auch an einem Ort anliegen, in welchem die Kapselwand einen nicht-konstanten Winkel zu einer Kapsel- und Brühkammerachse hat, bspw. am Ort eines Übergangs zwischen einer Stirnfläche und der umlaufenden Fläche.

In Kombination mit dem Ansatz, die Kapsel entlang einer umlaufenden Fläche zu umgreifen ist für die injektionsseitige Dichtung und/oder für die extraktionsseitige Dichtung besonders günstig, wenn mindestens eine der umlaufenden Dichtungslippen bzw. Dichtungswülste gegen eine Stirnfläche der Kapsel und mindestens eine der umlaufenden Dichtungslippen bzw. Dichtungswülste gegen eine umlaufende Fläche gedrückt wird.

Die Brühkammer eines erfindungsgemässen Extraktionsgeräts kann verschiedene mögliche Formen aufweisen, insbesondere kreiszylindrisch oder würfelförmig (wie bspw. in der PCT/CH2010/000097 gelehrt). Auch konisch - becherförmige Kapseln - mit oder ohne Rand und mit oder ohne Wölbung einer der Stirnflächen (einer Fläche, in der die Kapsel angestochen wird) nach innen - sind nicht ausgeschlossen. Gemäss einer Ausgestaltung kann die Lippe bzw. mindestens eine der Lippen eine nach innen zum Ort der Flüssigkeitsinjektion bzw. Flüssigkeitsextraktion hin ragen, insbesondere wenn sie im Bereich einer Stirnfläche der Kapsel an dieser anliegt. Dann wird der Flüssigkeitsdruck die Dichtungslippe zusätzlich zur Wirkung der Elastizität diese an die Kapsel herandrücken, beispielsweise im Bereich der Stirnfläche.

In Kombination mit einem Dichtungskragen, welcher die Kapsel umlaufend umgreift, kann dann eine solche nach innen ragende, zum Anliegen an die Stirnfläche vorgesehene Dichtungslippe vom Kragen im proximalen Bereich nach innen abstehen.

Eine solche insbesondere im Bereich der Stirnfläche nach innen ragende Dichtungslippe ist bevorzugt im Querschnitt flügel- oder lappenförmig.

Besonders bevorzugt ist für die injektionsseitige Dichtung und/oder für die extraktionsseitige Dichtung eine Ausgestaltung einer Dichtung mit einer nach innen ragende Lippe im Bereich der Stirnfläche und eine Mehrzahl von Dichtungslippen oder Dichtungswülsten mit Hohlräumen dazwischen im Bereich der umlaufenden Fläche und/oder im Übergang zwischen Stirnfläche und umlaufender Fläche. Das bewirkt eine mehrstufige Dichtung, die insbesondere injektionsseitig vorteilhaft ist, weil dort der Druck am grössten und die Abdichtung eine besondere Herausforderung ist. Die nach innen ragender Lippe ist dabei die erste Stufe, die dort angeordnet ist, wo ein grosser Druck anliegt, der aufgrund der Ausgestaltung der Dichtungslippe die Dichtungswirkung unterstützt. Die im Bereich der umlaufenden Fläche bzw. im Übergang vorhandenen Lippen/Wülsten dienen als weitere Stufen, die zusammen mit den dazwischen liegenden Hohlräumen verhindern, dass Restflüssigkeitsportionen, die bspw. während des Druckaufbaus oder eventuell auch danach die erste Stufe passieren, austreten können. Ausserdem bewirken sie eine stufenweise Druckreduktion für den Fall, dass die erste Stufe nicht dem ganzen Druckunterschied zwischen dem Flüssigkeitsdruck und dem Umgebungsdruck standhält.

Insbesondere die injektionsseitige Dichtung ist vorzugsweise so ausgebildet, dass sie allein aufgrund ihrer Elastizität ohne zusätzliche Klemmkraft die Kapsel diese umgreifend hält, so, dass die Kraft zum Herausziehen der Kapsel aus der umgreifenden Dichtung das Eigengewicht der Kapsel übersteigt, und zwar vorzugsweise auch dann, wenn die Kapsel vollständig mit Flüssigkeit getränkt ist.

Als Form von Dichtungslippen im Bereich des die Kapsel umgreifenden Dichtungskragens hat sich für die injektionsseitige Dichtung eine im Querschnitt sägezahnförmige Ausgestaltung als besonders günstig erwiesen. Eine solche Sägezahnform vereint die Wirkung einer nach innen ragenden Lippe, die durch den einsetzenden Druck die Dichtungswirkung verstärkend gegen die Kapsel gedrückt wird, mit der klemmenden Wirkung, indem sie im Vergleich zu einer nach innen ragenden lappenförmigen Lippe eine grössere Steifigkeit aufweist. Diese grössere Steifigkeit ermöglicht ein verlässliches umgreifendes Halten der Kapsel.

Nach dem Brühvorgang wird die Brühkammer insbesondere durch eine Relativbewegung der Einleitvorrichtung und der Ausleitvorrichtung geöffnet und die Kapsel ausgeworfen, beispielsweise in einen dafür vorgesehenen Kapselbehälter. Ein erfindungsgemässes Extraktionsgerät ist nun gemäss einer Gruppe von bevorzugten Ausführungsformen so ausgebildet, dass eine die Kapsel umgreifende Dichtung-insbesondere die injektionsseitige Dichtung - beim Öffnen der Brühkammer die Kapsel hält und so bewirkt, dass die Kapsel aus den gegenüber liegenden (insbesondere den extraktionsseitigen) Anstechspitzen und gegebenenfalls aus der auf der jeweils anderen Seite (insbesondere der Extraktionsseite) vorhandenen umgreifenden Dichtung herausgezogen wird. Zusätzlich weist das Extraktionsgerät ein Abstreifmittel auf, durch welches nach einem Teil der Relativbewegung die Kapsel relativ zum sich weg bewegenden Teil (insbesondere Einleitvorrichtung) zurückgehalten wird, wodurch sie aus der umgreifenden Dichtung gelöst wird und beispielsweise nach unten fallen kann. Das Abstreifmittel kann beispielsweise seitlich nach innen in die Brühkammer ragende Stege aufweisen, die während der Relativbewegung nach innen gefahren werden oder die aufgrund einer Wulst, Konizität oder sonstigen Abweichung von der reinen Zylinderform der Kapsel erst nach einem Teil der Relativbewegung an der Kapsel angreifen.

Ein Kaffee- oder Tee-Brühsystem, weist nebst einem Extraktionsgerät der in diesem Text und den Zeichnungen ausführlich beschriebenen Art auch eine Portionenkapsel mit einem Extraktionsgut auf. Die Portionenkapsel ist insbesondere von der Art mit einer Kunststoffwand, die das Extraktionsgut unmittelbar umgibt, also ohne dazwischen liegende stabilisierende oder als Filter wirkende Teile: d.h. die Kapsel besteht aus der Kapselwand und dem Extraktionsgut. Ein speziell bevorzugtes Kapselwand-Material ist Polypropylen (PP). Auch andere Materialien sind denkbar, insbesondere andere lebensmittelverträgliche Kunststoffe. Die Wandstärke beträgt insbesondere Polypropylenkapsel, vorzugsweise zwischen 0.1 mm und 0.5 mm, bspw. zwischen 0.2 mm und 0.4 mm, insbesondere zwischen 0.25 mm und 0.35 mm. Die Kapsel ist nach dem Befüllen eines Kapselkörpers mit dem Extraktionsgut durch einen Deckel verschlossen, insbesondere mit einem Verfahren, bei dem gleichzeitig mit dem Verschweissen ein vorstehender Rand des Kapselkörpers und des Deckels abgetrennt wird. Dadurch weist die Kapsel eine umlaufende Schweissbraue auf, die verstärkend wirkt. Die Dichtung bzw. eine der Dichtungen kann darauf abgestimmt sein und bspw. Dichtungslippen aufweisen, die beidseitig der Schweissbraue an der Kapsel anliegen.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen zeigen teilweise einander entsprechende Elemente in von Figur zu Figur unterschiedlichen Grössen. Es zeigen:
- Figur 1 eine Ansicht eines entlang einer Längsebene geschnittenen Brühmoduls;
- Figur 2 eine Ansicht einer näherungsweise würfelförmigen Kapsel;
- Figur 3 ein Schema einer Kaffeemaschine;
- Figur 4 eine Ansicht eines alternativen Brühmoduls, wobei das Gerüst des Brühmoduls nur teilweise dargestellt ist;
- Figur 5 eine Schnittdarstellung der Ausleitvorrichtung des Brühmoduls gemäss Figur 4 mit Kapsel;
- Figur 6 eine Ansicht einer ersten Ausführungsform einer Dichtung, insbesondere für die Ausleitvorrichtung;
- Figur 7 eine Ansicht einer zweiten Ausführungsform einer Dichtung, ebenfalls besonders für die Ausleitvorrichtung geeignet;
- Figur 8 eine Ansicht der geschnitten dargestellten Dichtung gemäss Figur 7;
- Figur 9 eine Ansicht einer weitern Ausführungsform einer Dichtung, die insbesondere für die Einleitvorrichtung geeignet ist;
- Figur 10 eine Ansicht der geschnitten dargestellten Dichtung gemäss Figur 9;
- Figuren 11 und 12 je eine Ansicht von weiteren geschnitten dargestellten Dichtungen, die für nicht würfelförmige sondern bspw. zylindrische oder konische Kapseln geeignet sind; und
- Figuren 13-15 Ansichten des entlang der Längsebene geschnittenen Brühmoduls gemäss Figur 1 in verschiedenen Zuständen.

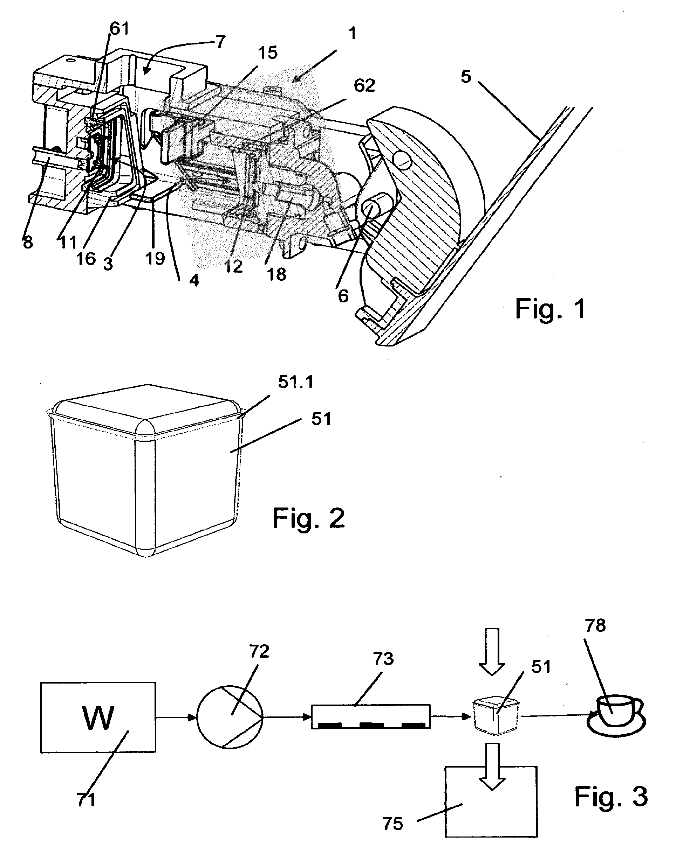

Das Brühmodul 1 gemäss Figur 1 ist vom Typus "horizontales Brühmodul". Es weist in an sich bekannter Art an einem Gerüst befestigt bzw. geführt eine Ausleitvorrichtung 3 und eine Einleitvorrichtung 4 auf, die durch einen um einen Drehzapfen 6 schwenkbaren Bedienhebel 5 relativ zueinander verschiebbar sind. In der gezeichneten Ausführungsform ist die Einleitvorrichtung 4 durch eine Schwenkbewegung des Bedienhebels 5 nach vorne in Richtung der Ausleitvorrichtung 3 verschiebbar, während letztere relativ zum Gerüst unbeweglich ist.

In Figuren 1 und 3 gut sichtbar ist die Einwurföffnung 7 zum Einwerfen einer kubischen Portionenkapsel. Ein Beispiel einer solchen kubischen, annähernd würfelförmigen Portionenkapsel 51 ist in Figur 2 gezeichnet. Die Kapsel 51 ist vom Kapseltyp, wie er in der Patentanmeldung PCT/CH2010/000097 ausführlich beschrieben ist. Bezüglich Beschaffenheit einer solchen Kapsel mit einer Kunststoffwand und bezüglich deren Herstellung - bevorzugt wird die Kapsel in einem Verfahren verschlossen, bei dem gleichzeitig mit dem Verschweissen ein vorstehender Rand abgetrennt wird - wird auf diese Patentanmeldung PCT/CH2010/000097 verwiesen. In Figur 2 sieht man nebst der charakteristischen Kapselform auch eine umlaufende Schweissbraue 51.1, die beim genannten Verfahren entstanden ist und als zusätzliche Versteifung der Kapsel wirken kann.

Ausführungsformen des erfindungsgemässen Extraktionsgeräts sind insbesondere auf Kapseln aus Kunststoff abgestimmt. Ein diesbezüglich speziell bevorzugtes Material für die Kapsel ist Polypropylen (PP). Auch andere Materialien sind denkbar, insbesondere andere lebensmittelverträgliche Kunststoffe. Die Wandstärke beträgt bei der Ausgestaltung als Kunststoffkapsel, insbesondere Polypropylenkapsel, vorzugsweise zwischen 0.1 mm und 0.5 mm, bspw. zwischen 0.2 mm und 0.4 mm, insbesondere zwischen 0.25 mm und 0.35 mm.

Die Einwurföffnung 7 ist im Gerüst ausgebildet, befindet sich im Bereich der Ausleitvorrichtung 3 und bleibt wie diese bei einer Bewegung des Bedienhebels 5 stationär. Die Einwurföffnung 7 kann sich gegen unten verengend leicht konisch sein um so beim Einwerfen eine zentrierende Wirkung auf die Kapsel 51 zu haben, ohne dass die Gefahr eines Verkantens der Kapsel zu gross wäre.

Im Betriebszustand dient das Brühmodul als Brühmodul einer Kaffeemaschine. Eine erfindungsgemässe Kaffeemaschine mit einem Brühmodul weist, wie in Figur 3 schematisch dargestellt, nebst dem Brühmodul einen Wassertank 71, eine Pumpe 72 zum Zuführen von Brühwasser zur Einleitvorrichtung 4 und eine Wasserheizungsvorrichtung 73 (bspw. Durchlauferhitzer) auf. Unterhalb des Brühmoduls ist ein Kapselbehälter 75 angeordnet, in welchen die Kapseln 51 nach dem Brühprozess fallen bzw. transportiert werden.

Das Zuführen des aufgeheizten Wassers zur Einleitvorrichtung 4 erfolgt über flexible Wasserleitungsabschnitte (Schläuche) und über Zuführkanäle 18. Die Einleitvorrichtung weist ausserdem mindestens eine Anstechspitze 12 mit zugeordneter Zuführöffnung auf, so dass die Kapsel angestochen und durch die Zuführöffnung mit der Extraktionsflüssigkeit versorgt werden kann. Die Kaffeemaschine weist weiter bspw. einen unterhalb der Brühkammer angeordneten Kapselbehälter 75 auf, in welchen die Kapsel nach dem Brühvorgang durch Anheben des Bedienhebels 5 selbsttätig ausgeworfen wird.

Auch die Ausleitvorrichtung 3 ist mit mindestens einer Anstechspitze 11 und einer zugeordneten Ausleitöffnung versehen. Weiter ist je nach Konfiguration auch eine Auslaufleitung vorhanden, mit welcher aus dem Austritt 8 der Ausleitvorrichtung austretender Kaffee (oder dgl.) so geführt wird, dass er in eine am vorgesehenen Ort abgestellte Tasse 78 rinnt.

Die Anstechspitzen 11 der Ausleitvorrichtung 3 sind von einer extraktionsseitigen Dichtung 61 umgeben, und die Anstechspitzen der Einleitvorrichtung 4 sind von einer injektionsseitigen Dichtung 62 umgeben. Diese Dichtungen werden nachstehend noch eingehender beschrieben. Ebenfalls dargestellt ist ein Abstreifelement 15, dessen Funktion ebenfalls nachstehend noch beschrieben wird.

Die Anstechspitzen und Elemente, an denen sie befestigt sind, können gemäss der erwähnten Patentanmeldung PCT/CH2010/000098 ausgebildet sein, auf die hier explizit Bezug genommen wird.

Die bei offener Brühkammer (Figur 1) durch die Einwurföffnung 7 eingeworfene, annähernd würfelförmige Kapsel 51 wird durch eine Auflagepartie 16 der Ausleitvorrichtung 3 und eine bewegbare Kapselauflage 19 gestützt im Brühmodul gehalten.

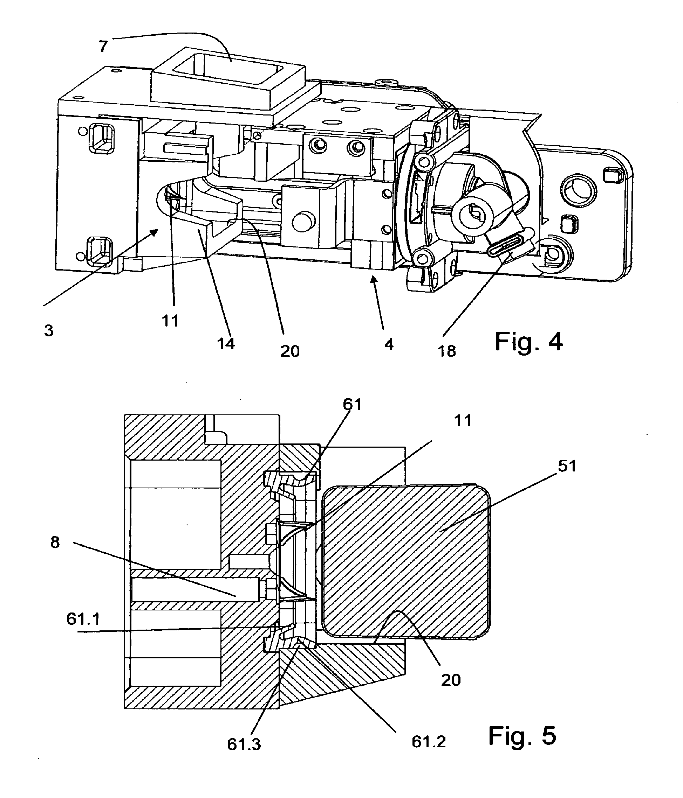

**Figur 4** zeigt eine Variante des Brühmoduls, bei welchem die in die offene Brühkammer eingeworfene, annähernd würfelförmige Kapsel 51 durch eine Auflage 20 der Brühkammer gestützt wird, die zusammen mit seitlichen Wänden 14, der die Anstechspitzen 11 der Ausleitvorrichtung aufweisenden Endfläche der Ausleitvorrichtung und Elementen der Einleitvorrichtung 4 zusammen die Brühkammer bildet. Das Brühmodul gemäss Figur 4 entspricht bis auf das Dichtungssystem dem in der Patentanmeldung PCT/CH2010/000099 beschriebenen Brühmodul, auf dessen Lehre hier ausdrücklich Bezug genommen wird.

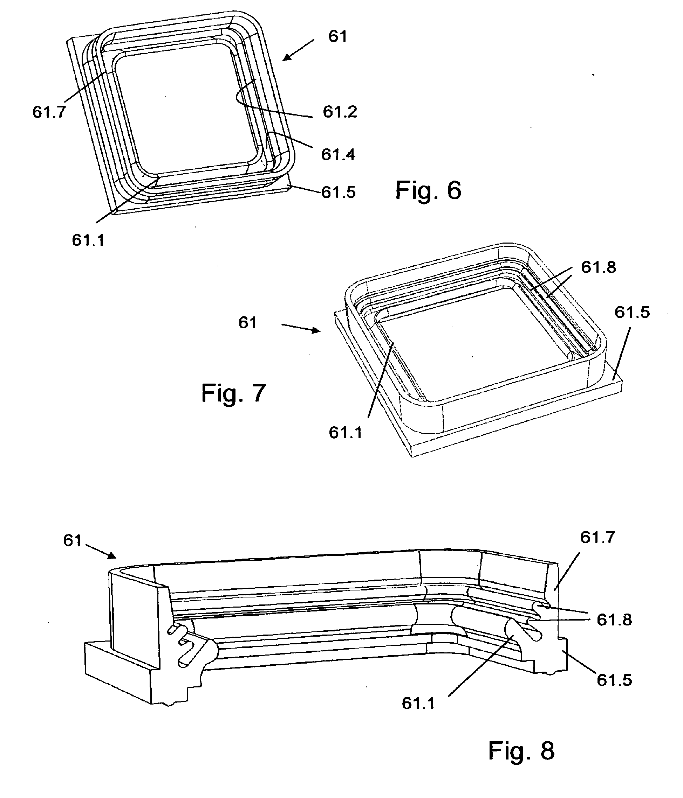

**Figur 5** zeigt die Ausleitvorrichtung des Brühmoduls von Figur 5 mit einer schematisch dargestellten Kapsel 51 im Schnitt. Deutlich ist die Dichtung 61 zu sehen, die auch in **Figur 6** dargestellt ist. Diese weist eine nach innen ragende, umlaufende und an der Stirnseite der Kapsel 51 anliegende Dichtungslippe 61.1 auf. Entlang einer umlaufenden Fläche der Kapsel liegt ein Dichtungswulst 61.2 als weitere Dichtungsstufe an. Im dargestellten Ausführungsbeispiel weist die Dichtung im Bereich der Dichtungswulst 61.2 eine optionale äussere Kerbe 61.3 auf, welche die Elastizität der Dichtung im Bereich des Dichtungswulstes 61.2 erhöht. Zwischen der Dichtungslippe und der Dichtungswulst - also Bereich der abgerundeten Kante der Kapsel - ist ein ausgeprägter Graben 61.4 ausgebildet, der auch bei starkem Anpressen der Kapsel gegen die Ausleitvorrichtung einen Hohlraum zwischen der Dichtungslippe 61.1, der Dichtungswulst 61.2 und der Kapsel 51 bildet. Ein Dichtungs-Flansch 61.5 dient der Befestigung im Brühmodul.

Ein weiteres Ausführungsbeispiel einer Dichtung 61 für die Ausleitvorrichtung ist in **Figuren 7 und 8** dargestellt. Diese Dichtung entspricht der Dichtung der Ausleitvorrichtung 3 des Brühmoduls gemäss Figur 1. Wie auch die vorstehend beschriebene Dichtung weist diese Dichtung 61 einen Dichtungskragen 61.7 auf, der die Kapsel 51 umgreift. Zusätzlich zur proximal am Dichtungskragen ansetzenden, nach innen ragenden und an der Stirnfläche der Kapsel 51 anliegenden (ersten) Dichtungslippe 61.1 weist die Dichtung 61 zwei weitere Dichtungslippen 61.8 auf, die im Bereich der Kante der Kapsel an dieser anliegen. Insbesondere können die Dichtungslippen 61.8 so angeordnet sein, dass sie beidseitig der versteifenden Schweissbraue 51.1 liegen, was eine besonders gute Stabilität und Dichtungswirkung ergibt.

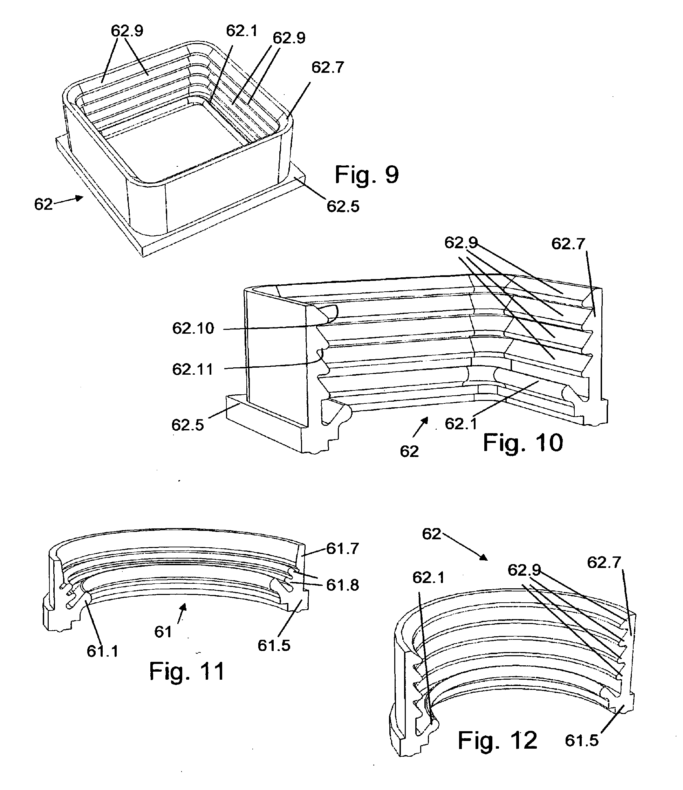

In **Figuren 9 und 10** ist noch die injektionsseitige Dichtung 62 des Brühmoduls gemäss Figur 1 dargestellt. Zusätzlich zur an der Stirnfläche der Kapsel anliegenden, nach innen ragenden ersten Dichtungslippe 62.1 ist an einem Dichtungskragen 62.7 eine Mehrzahl von zweiten, umgreifenden Dichtungslippen 62.9 vorhanden. Im dargestellten Ausführungsbeispiel sind es vier solche zweiten Dichtungslippen 62.9, in anderen Ausführungsformen sind zwei, drei, fünf oder gar mehr solche (oder andere) Dichtungslippen vorhanden. Bevorzugt beträgt die Anzahl 2-5, insbesondere 3-5. Wie die extraktionsseitige Dichtung 61 weist auch die injektionsseitige Dichtung 62 in der dargestellten Ausführungsform einen Befestigungsflansch 62.5 auf.

Die zweiten Dichtungslippen sind im Unterschied zur ersten Dichtungslippe 61.1 und zu den weiteren Dichtungslippen 61.8 der extraktionsseitigen Dichtung 61 aufgrund ihrer Geometrie eine relativ grosse Steifigkeit auf, wodurch sie auch ohne von aussen anliegenden eine relativ grosse elastische Kraft auf eine umgriffene Kapsel ausüben und diese halten. Im gezeichneten Ausführungsbeispiel sind die zweiten Dichtungslippen sägezahnförmig mit einem nach distal (d.h. weg von der Richtung, aus der die Brühflüssigkeit injiziert wird) ragenden Lippenrücken 62.10. Diese Form hat ebenfalls die Wirkung, dass der Druck der Brühflüssigkeit von proximal her gegen die ungefähr senkrechten Flächen 62.11 die Dichtungslippen noch stärker gegen die Kapselwand drückt. Im Unterschied zu gegen innen ragenden, im Querschnitt eher flügelförmigen Lippen wie den ersten Dichtungslippen 62.1 bewirkt die Sägezahnform jedoch auch die erwähnte Steifigkeit.

In **Figuren 11 und 12** ist noch je eine extraktionsseitige Dichtung 61 und eine injektionsseitige Dichtung 62 dargestellt, wie sie für nicht kubische, sondern beispielsweise kreiszylindrische, Fass-förmige oder becherförmige Kapseln zum Einsatz kommen können. In den Figuren sieht man deutlich die im Unterschied zu den Figuren 8 und 10 um eine Kapselachse rotationssymmetrische Form.

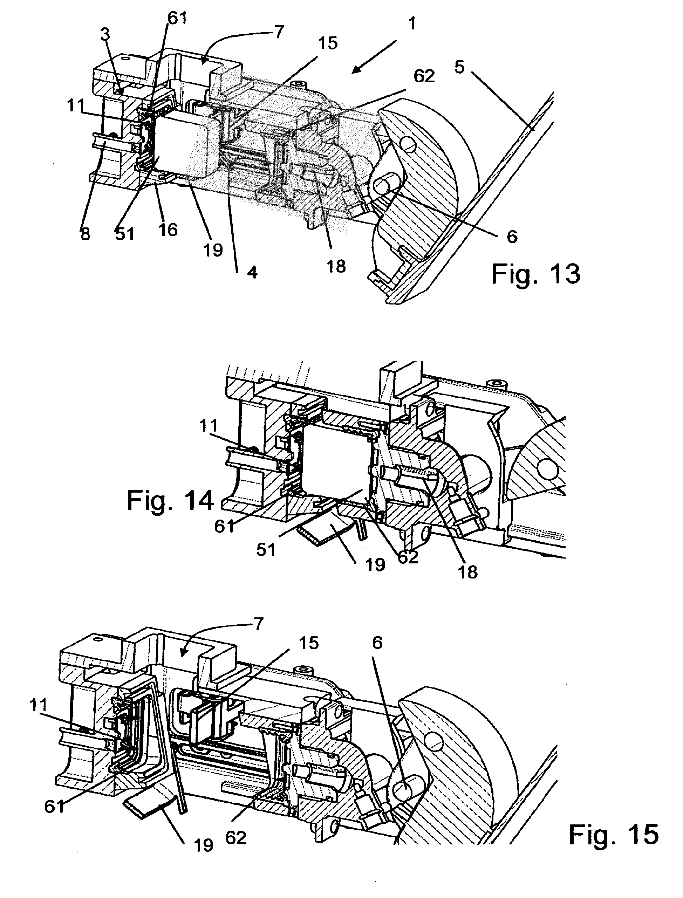

Ausführungsformen des erfindungsgemässen Extraktionsgeräts sind so ausgebildet, dass injektionsseitige Dichtung 62 beim Öffnen der Brühkammer die Kapsel hält und aus den extraktionsseitigen Anstechspitzen und aus der extraktionsseitigen umgreifenden Dichtung 61 herauszieht, damit die Kapsel nach Gebrauch in den Kapselbehälter 75 fällt. Dies ist in **Figuren 13-15** illustriert.

Figur 1 zeigt die Ausgangslage des Brühmoduls ohne eingeworfene Kapsel. In Figur 13 ist eine Kapsel 51 durch die Einwurföffnung 7 eingeworfen worden und ruht auf der bewegbaren Kapselauflage 19 und der Auflagepartie 16 der Ausleitvorrichtung 3. Daran anschliessend wird durch eine Bewegung des Bedienhebels 5 die Einleitvorrichtung 4 zur Kapsel 51 und zur Ausleitvorrichtung 3 hin verschoben, wodurch die injektionsseitige Dichtung 62 über die Kapsel gestülpt und die Kapsel gegen die Ausleitvorrichtung gedrückt und sowohl injektionsseitig als auch extraktionsseitig angestochen wird. Bei der die Brühkammer so verschliessenden Relativbewegung kann auch die Kapselauflage von der Kapsel weg verschoben werden, sobald die Kapsel von der injektionsseitigen Dichtung umgriffen und dadurch in ihrer Position gehalten wird. Anschliessend an das Verschliessen der Brühkammer findet der Brühprozess statt, in welchem die Brühflüssigkeit unter Druck in die Kapsel eingeleitet und das Brühgetränk extraktionsseitig aus der Kapsel ausgeleitet wird.

Figur 14 zeigt das Brühmodul mit der Kapsel 51 am Anfang der die Brühkammer öffnenden Relativbewegung von Einleitvorrichtung und Ausleitvorrichtung, die erneut mit einer Schwenkbewegung des Bedienhebels bewirkt wird. Die injektionsseitige Dichtung 62 hält die Kapsel und zieht sie aus den extraktionsseitigen Anstechspitzen 11 und der extraktionsseitigen Dichtung 61 heraus. Bei der Fortführung der Bewegung weiter von der Position gemäss Figur 14 nach rechts in Richtung zur Lage gemäss Figur 15 wird die Kapsel von den Abstreifmitteln 15 erfasst und ihre Bewegung relativ zur sich weiter bewegenden Einleitvorrichtung blockiert, wodurch die Kapsel auch aus der injektionsseitigen Dichtung 62 herausgezogen wird. Weil die Kapselauflage 19 aus der Ausgangsstellung weg verschoben ist, kann dann die Kapsel nach unten in den Kapselbehälter 75 fallen. Figur 15 zeigt die Situation mit geöffneter Brühkammer, bevor die Kapselauflage 19 wieder in die Ausgangsstellung zurück verschoben wird.

In der gezeichneten Ausführungsform ist das Brühmodul vom Typ "horizontales Brühmodul". Es sind aber auch andere Ausführungsformen möglich Insbesondere kann das Extraktionsgerät auch vom Typ "Kolbenmaschine sein", in welchem die Ausleitvorrichtung oder eventuell die Einleitvorrichtung in einem Kolben integriert ist, der an einem feststehenden Teil des Extraktionsgeräts befestigbar ist um die Brühkammer zu bilden.

## Patentansprüche

1. Extraktionsgerät, beispielsweise Kaffeemaschine, mit einem Brühmodul (1) zum Aufnehmen einer Kapsel (51) mit einer Kapselwand und einem in einem Kapselinneren aufgenommenen Extraktionsgut, wobei das Brühmodul (1) ein erstes Brühmodulteil und ein relativ zu diesem bewegbares zweites Brühmodulteil aufweist, wobei das erste und das zweite Brühmodulteil eine Ausleitvorrichtung (3) zum Ausleiten eines Extraktionsprodukts aus der Kapsel und eine Einleitvorrichtung (4) zum Einleiten einer Extraktionsflüssigkeit in die Kapsel bilden, wobei die Einleitvorrichtung mindestens eine Anstechspitze (12) zum Anstechen der Kapsel aufweist, wobei die Einleitvorrichtung (4) mit einer die Anstechspitze bzw. die Anstechspitzen (12) der Einleitvorrichtung umgebenden, elastisch verformbaren injektionsseitigen Dichtung (62) versehen ist, die einen die Kapsel positionierenden und haltend umgreifenden Dichtungskragen (62.7) und mindestens eine umlaufende Dichtungslippe (62.1, 62.9) und/oder einen umlaufenden Dichtungswulst aufweist, wobei die mindestens eine Dichtungslippe bzw. der mindestens eine Dichtungswulst linien-, oder streifenartig an einer Fläche der Kapsel anliegt und die Kapselwand gegen das Kapselinnere drückt.

2. Extraktionsgerät nach Anspruch 1, wobei die Ausleitvorrichtung (3) eine extraktionsseitige Dichtung (61) mit mindestens einer umlaufenden Dichtungslippe (61.1, 61.8) und/oder einem umlaufenden Dichtungswulst (61.2) aufweist, wobei die Dichtungslippe bzw. der Dichtungswulst linien-, oder streifenartig an einer Fläche der Kapsel anliegt und die Kapselwand gegen ein Kapselinneres drückt.

3. Extraktionsgerät nach Anspruch 1 oder 2, **dadurch gekennzeichnet, dass** mindestens eine Dichtungslippe (61.8, 62.9) und/oder ein Dichtungswulst (61.2) die Kapsel (51) entlang einer umlaufenden Fläche umgreift und dabei durch ihre Elastizität gegen die Kapselwand gedrückt wird, derart, dass die Kapsel durch die Dichtung gehalten wird.

4. Extraktionsgerät nach einem der vorangehenden Ansprüche, **dadurch gekennzeichnet, dass** die injektionsseitige Dichtung (62) bzw. mindestens eine der Dichtungen (61, 62) eine Mehrzahl von umlaufenden Dichtungslippen (61.8, 62.9) und/oder Dichtungswülsten aufweist, die aufgrund ihrer Elastizität die Kapselwand gegen ein Kapselinneres drücken, wobei zwischen aufeinander folgenden Dichtungslippen bzw. Dichtungswülsten jeweils eine Vertiefung angeordnet ist, derart, dass im Betriebszustand zwischen den aufeinander folgenden Dichtungslippen bzw. Dichtungswülsten und der Kapsel ein umlaufender Hohlraum gebildet wird.

5. Extraktionsgerät nach einem der vorangehenden Ansprüche, **dadurch gekennzeichnet, dass** mindestens eine der umlaufenden Dichtungslippen (61.1, 62.1) bzw. Dichtungswülste gegen eine Stirnfläche der Kapsel und mindestens eine der umlaufenden Dichtungslippen bzw. Dichtungswülste (61.2, 61.8, 62.9) gegen eine umlaufende Fläche gedrückt wird.

6. Extraktionsgerät nach Anspruch 5, **dadurch gekennzeichnet, dass** eine Mehrzahl von umlaufenden Dichtungslippen bzw. Dichtungswülste (61.2, 61.8, 62.9) gegen eine umlaufende Fläche gedrückt wird, wobei zwischen aufeinander folgenden Dichtungslippen bzw. Dichtungswülsten jeweils eine Vertiefung angeordnet ist, derart, dass im Betriebszustand zwischen den aufeinander folgenden Dichtungslippen bzw. Dichtungswülsten und der Kapsel ein umlaufender Hohlraum gebildet wird.

7. Extraktionsgerät nach einem der Ansprüche 4-6, **dadurch gekennzeichnet, dass** die aufeinander folgenden Dichtungslippen im Querschnitt eine Sägezahnform aufweisen.

8. Extraktionsgerät nach einem der vorangehenden Ansprüche, **dadurch gekennzeichnet, dass** die Einleitvorrichtung (4) mindestens eine Flüssigkeits-Einleitöffnung aufweist, welche von der Anstechspitze bzw. den Anstechspitzen (12) räumlich getrennt ist.

9. Extraktionsgerät nach einem der vorangehenden Ansprüche, **dadurch gekennzeichnet, dass** die injektionsseitige Dichtung die Kapsel umgreift und diese allein aufgrund der Elastizität der Dichtung hält, so, dass beim Öffnen der Brühkammer aufgrund der Haltewirkung der Dichtung (62) die Kapsel aus extraktionsseitigen Anstechspitzen (11) herausgezogen wird.

10. Extraktionsgerät nach Anspruch 9, **gekennzeichnet durch** ein Abstreifmittel (15) zum lösen der Kapsel aus der injektionsseitigen Dichtung (62).

11. Extraktionsgerät nach einem der vorangehenden Ansprüche, **dadurch gekennzeichnet, dass** das Brühmodul ein horizontales Brühmodul ist.

12. Extraktionsgerät nach einem der vorangehenden Ansprüche, **dadurch gekennzeichnet, dass** die injektionsseitige Dichtung (62) bzw. mindestens eine der Dichtungen (61, 62) einen nach aussen Abstehenden Befestigungsflansch (61.5, 62.5) aufweist.

13. Extraktionsgerät nach einem der vorangehenden Ansprüche, wobei die Dichtung (62) mindestens eine umlaufende Dichtungslippe (62.1, 62.9) aufweist, **dadurch gekennzeichnet, dass** die Dichtungslippe bzw. mindestens eine der Dichtungslippen nach innen zum Ort der Flüssigkeitsinjektion bzw. Flüssigkeitsextraktion hin ragen, wodurch die Dichtungslippe durch einen Flüssigkeitsdruck zusätzlich zur Wirkung der Elastizität an die Kapsel angedrückt wird.

14. Kaffee- oder Tee-Brühsystem, aufweisend ein Extraktionsgerät nach einem der vorangehenden Ansprüche sowie eine Portionenkapsel (51) mit Extraktionsgut, wobei das Brühmodul eine Brühkammer bildet, deren Dimensionen auf die Portionenkapsel abgestimmt sind.

## Claims

1. An extraction apparatus, for example a coffee machine, with a brewing module (1) for receiving a capsule (51) with a capsule wall and with an extraction material received in a capsule interior, wherein the brewing module (1) comprises a first brewing module part and a second brewing module part which is movable relative to the first brewing module part, wherein the first and the second brewing module part form a discharge device (3) for the discharge of an extraction product out of the capsule, and form an introduction device (4) for introducing an extraction fluid into the capsule, wherein the introduction device comprises at least one piercing tip (12) for piercing the capsule, wherein the introduction device (4) is provided with an elastically deformable, injection-side seal (62) which surrounds the piercing tip or the piereing tips (12) of the introduction device and which comprises a seal collar (62.7) positioning the capsule and encompassing the capsule in a holding manner, and at least one circumferential scaling lip (62.1, 62.9) and/or circumferential sealing bead, wherein the at least one sealing lip or the at least one sealing bead bears on a surface of the capsule in a line-like or strip-like manner and presses the capsule wall against the capsule interior.

2. An extraction apparatus according to claim 1, wherein the discharge device (3) comprises an extraction-side seal (61) with at least one circumferential scaling lip (61.1, 61.8) and/or circumferential sealing bead (61.2), wherein the sealing lip or the sealing bead bears in a line-like or strip-like manner on a surface of the capsule and presses the capsule wall against a capsule interior.

3. An extraction apparatus according to claim 1 or 2, **characterised in that** at least one scaling lip (61.8, 62.9) and/or scaling bead (61.2) encompasses the capsule (51) along a circumferential surface and thereby on account of its elasticity is pressed against the capsule wall in such a manner that the capsule is held by the seal.

4. An extraction apparatus according to one of the preceding claims, **characterised in that** the injection-side seal (62) or at least one of the seals (61, 62) comprises a plurality of circumferential scaling lips (61.8, 62.9) and/or scaling beads, which on account of their elasticity press the capsule wall against a capsule interior, whereby in each case a recess is arranged between consecutive sealing lips or sealing beads in such a manner that a circumferential cavity is formed between the consecutive scaling lips or sealing beads and the capsule, in the operating condition.

5. An extraction apparatus according to one of the preceding claims, **characterised in that** at least one of the circumferential sealing lips (61.1, 62.1) or the sealing beads is pressed against an end-face of the capsule, and at least one of the circumferential scaling lips or scaling beads (61.2, 61.8, 62.9) is pressed against a circumferential surface.

6. An extraction apparatus according to claim 5, **characterised in that** a plurality of circumferential sealing lips or sealing beads (61.2, 61.8, 62.9) is pressed against a circumferential surface, wherein in each case a recess is arranged between consecutive sealing lips or sealing beads in such a manner that a circumferential cavity is formed between the consecutive scaling lips or scaling beads and the capsule, in the operating condition.

7. An extraction apparatus according to one of the claims 4-6, **characterised in that** the consecutive sealing lips have a saw-tooth shape in cross section.

8. An extraction apparatus according to one of the preceding claims, **characterised in that** the introduction device (4) comprises at least one fluid introduction opening which is spatially separated from the piereing tip or the piercing tips (12).

9. An extraction apparatus according to one of the preceding claims, **characterised in that** the injection-side seal encompasses the capsule and holds this alone on account of the plasticity of the seal, so that on opening the brewing chamber, the capsule is pulled out of extraction-side piercing tips (11) on account of the holding effect of the seal (62).

10. An extraction apparatus according to claim 9, **characterised by** a stripping means (15) for releasing the capsule from the injection-side seal (62).

11. An extraction apparatus according to one of the preceding claims, **characterised in that** the brewing module is a horizontal brewing module.

12. An extraction apparatus according to one of the preceding claims, **characterised in that** the injection-side seal (62) or at least one of the seals (61, 62) comprises an outwardly projecting fastening flange (61.5, 62.5).

13. An extraction apparatus according to one of the preceding claims, wherein the seal (62) comprises at least one circumferential sealing lip (62.1, 62.9), **characterised in that** the scaling lip or at least one of the sealing lips projects inwardly towards the location of the fluid injection or fluid extraction, by which means the scaling lip is pressed onto the capsule by a fluid pressure, additionally to the effect of the elasticity.

14. A coffee or tea brewing system comprising an extraction apparatus according to one of the preceding claims, as well as a portion capsule (51) with extraction material, wherein the brewing module forms a brewing chamber whose dimensions arc matched to the portion capsule.

## Revendications

1. Appareil d'extraction, par exemple machine à café, doté d'un module de préparation (1) qui reprend une capsule (51) dotée d'une paroi de capsule, un produit d'extraction étant repris à l'intérieur de la capsule,
le module de préparation (1) présentant une première partie de module de préparation et une deuxième partie de module de préparation mobile par rapport à la première,
la première et la deuxième partie du module de préparation formant un ensemble d'extraction (3) pour une extraction d'un produit d'extraction hors de la capsule et formant un ensemble d'introduction (4) pour une introduction d'un liquide d'extraction dans la capsule,
l'ensemble d'introduction présentant au moins une pointe perforante (12) pour une perforation de la capsule,
l'ensemble d'introduction (4) étant doté d'un joint d'étanchéité (62) élastiquement déformable, situé côté injection et entourant la pointe perforante ou les pointes perforantes (12) de l'ensemble d'introduction,
le joint d'étanchéité (62) présentant un collet d'étanchéité (62.7) qui positionne la capsule et la chevauche pour la maintenir et au moins une lèvre périphérique d'étanchéité (62.1, 62.9) et/ou un bourrelet périphérique d'étanchéité,
la ou les lèvres d'étanchéité et le ou les bourrelets d'étanchéité reposant en ligne ou en ruban sur une surface de la capsule et repoussant la paroi de la capsule vers l'intérieur de la capsule.

2. Appareil d'extraction selon la revendication 1, dans lequel l'ensemble d'extraction (3) présente un joint d'étanchéité (61) situé côté extraction et doté d'au moins une lèvre périphérique d'étanchéité (61.1, 61.8) et/ou un bourrelet périphérique d'étanchéité (61.2), la lèvre d'étanchéité et le bourrelet d'étanchéité reposant en ligne ou en ruban sur une surface de la capsule et repoussant la paroi de la capsule vers l'intérieur de la capsule.

3. Appareil d'extraction selon les revendications 1 ou 2, **caractérisé en ce qu'**au moins une lèvre d'étanchéité (61.8, 62.9) et/ou un bourrelet d'étanchéité (61.2) chevauchent la capsule (51) le long d'une surface périphérique et sont ainsi repoussés par leur élasticité contre la paroi de la capsule de telle sorte que la capsule est maintenue par le joint d'étanchéité.

4. Appareil d'extraction selon l'une des revendications précédentes, **caractérisé en ce que** le joint d'étanchéité (62) situé du côté injection ou au moins un des joints d'étanchéité (61, 62) situé côté injection présentent plusieurs lèvres périphériques d'étanchéité (61.8, 62.9) et/ou plusieurs bourrelets d'étanchéité qui, du fait de leur élasticité, repoussent la paroi de la capsule contre l'intérieur de la capsule, un creux étant prévu entre les lèvres d'étanchéité ou bourrelets d'étanchéité successifs de telle sorte qu'en état de fonctionnement, un espace creux périphérique est formé entre les lèvres d'étanchéité ou bourrelets d'étanchéité successifs et la capsule.

5. Appareil d'extraction selon l'une des revendications précédentes, **caractérisé en ce qu'**au moins l'une des lèvres périphériques d'étanchéité (61.1, 62.1) ou des bourrelets d'étanchéité soient repoussés contre une surface frontale de la capsule et **en ce qu'**au moins une des lèvres périphériques d'étanchéité ou l'un des bourrelets d'étanchéité (61.2, 61.8, 62.9) soit repoussée contre une surface périphérique.

6. Appareil d'extraction selon la revendication 5, **caractérisé en ce que** plusieurs lèvres périphériques d'étanchéité ou bourrelets périphériques d'étanchéité (61.2, 61.8, 62.9) sont repoussés contre une surface périphérique, un creux étant disposé entre les lèvres d'étanchéité ou bourrelets d'étanchéité successifs de manière à ce qu'en état de fonctionnement, un espace creux périphérique soit formé entre les lèvres d'étanchéité ou bourrelets d'étanchéité successifs et la capsule.

7. Appareil d'extraction selon l'une des revendications 4 à 6, **caractérisé en ce que** les lèvres d'étanchéité successives présentent en section transversale la forme de dents de scie.

8. Appareil d'extraction selon l'une des revendications précédentes, **caractérisé en ce que** l'ensemble d'introduction (4) présente au moins une ouverture d'introduction de liquide qui est séparée spatialement de la pointe perforante ou des pointes perforantes (12).

9. Appareil d'extraction selon l'une des revendications précédentes, **caractérisé en ce que** le joint d'étanchéité situé côté injection chevauche la capsule et maintient cette dernière uniquement grâce à l'élasticité du joint d'étanchéité de telle sorte que lors de l'ouverture de la chambre de préparation, la capsule soit extraite hors des pointes perforantes (11) situées côté extraction grâce à l'effet de maintien du joint d'étanchéité (62).

10. Appareil d'extraction selon la revendication 9, **caractérisé par** un moyen de raclage (15) qui détache la capsule du joint d'étanchéité (62) situé côté injection.

11. Appareil d'extraction selon l'une des revendications précédentes, **caractérisé en ce que** le module de préparation est un module de préparation horizontal.

12. Appareil d'extraction selon l'une des revendications précédentes, **caractérisé en ce que** le joint d'étanchéité (62) situé côté injection ou au moins l'un des joints d'étanchéité (61, 62) présentent une bride de fixation (61.5, 62.5) qui déborde vers l'extérieur.

13. Appareil d'extraction selon l'une des revendications précédentes, dans lequel le joint d'étanchéité (62) présente au moins une lèvre périphérique d'étanchéité (62.1, 62.9), **caractérisé en ce que** la lèvre d'étanchéité ou au moins l'une des lèvres d'étanchéité débordent vers l'intérieur à l'emplacement de l'injection de liquide ou de l'extraction de liquide, grâce à quoi la lèvre d'étanchéité est encore repoussée contre la capsule par la pression du liquide en plus de l'effet d'élasticité.

14. Système de préparation de café ou de thé, présentant un appareil d'extraction selon l'une des revendications précédentes ainsi qu'une capsule (51) de portion présentant un produit d'extraction, le module de préparation formant une chambre de préparation dont les dimensions sont accordées à la capsule de portion.
